# EUROPEAN PATENT APPLICATION

(11) **EP 0 747 894 A2**
(43) Date of publication of application: **11.12.1996**
(21) Application number: 96108925.7
(22) Date of filing: 04.06.1996
(51) Int. Cl.: G11B 7/135, G11B 7/12, G11B 7/095

(54) **Optical head device with large tolerance to tilting**

(30) Priority: 05.06.1995 JP 137674/95
(71) Applicant: NEC CORPORATION, Tokyo (JP)
(72) Inventor: Kawata, Seiji, c/o NEC Corp., Tokyo (JP)
(74) Representative: VOSSIUS & PARTNER

(57) **Abstract**

An optical head device includes a collimating lens (9) or an aperture structure (13) which is disposed between a semiconductor laser (1) and a beam splitter (3;28) with the collimating lens or the aperture structure having an effective aperture smaller than an effective aperture of an objective lens (4). The device also includes a polarization aperture structure (11) and a quarter-wave plate (12) which, out of the light in a polarization direction, allow a portion of the light that is incident on an aperture portion whose diameter is smaller than the effective aperture of the objective lens to pass through, while allowing the remaining portion of the light to be diffracted, absorbed or reflected such that the light orthogonally directed thereto passes as it is through entire surfaces of the polarization aperture structure and the quarter-wave plate. The light passed is led to the optical detector without the reflected light being spatially lost. It is possible to increase a range of tolerance for the tilting of the optical disk, and to reduce any deterioration caused by the tilting of the optical disk.

## Description

The present invention relates to an optical head device for reading data written in an optical disk, and more particularly to an optical head device adapted to high density writing and reading of data.

Conventionally, in a typical optical head device, the light emitted from a semiconductor laser is irradiated on the entire surface of an objective lens, and the data on an optical disk is read by use of a convergent beam with a diffraction limit that is determined by Numerical Aperture NA of the objective lens.

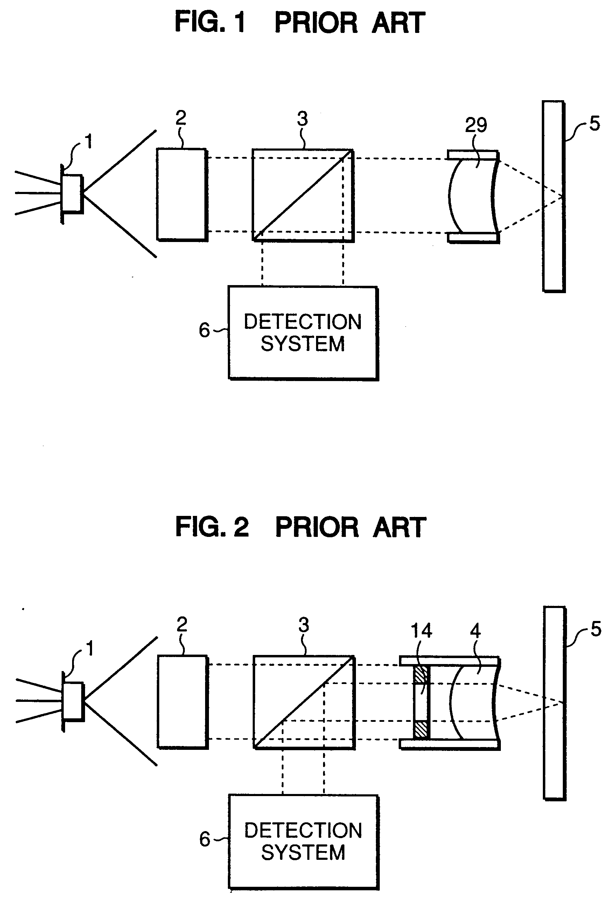

A main portion of the conventional typical optical head device referred to above is shown by a structural diagram in Fig. 1. As shown therein, the light emitted from a semiconductor laser 1 changes to parallel beams at a collimating lens 2, which are incident on the entire surface of an objective lens 29 and focused on an optical disk 5. Out of the reflected light that is modulated by the recorded data on the optical disk 5, only the light that has returned into an effective aperture of the objective lens 29 is reflected by a beam splitter 3 and is led to an RF and servo signal detection system 6.

However, in recent years, an optical disk with different recording densities is on the market. Such an optical disk device is proposed in JP-A-5-120720. It is proposed therein that, as a method for reading an optical disk having two or more kinds of recording densities, a variable aperture be provided in front of the objective lens so as to vary a diameter of a convergent beam.

Fig. 2 diagrammatically shows a main portion of the optical system. This shows an arrangement wherein an aperture 14 is additionally provided to the optical system of the ordinary optical head device as shown in Fig. 1. The changing of this aperture 14 enables the varying of the convergent beam diameter on the optical disk 5, thus allowing the reading of the optical disk having different recording densities.

In the illustrated arrangement, when the objective lens 4 is moved while an actuator of the objective lens traces a track, if the aperture 14 is provided outside the actuator, then there occurs a deviation in the relative position between the objective lens 4 and the aperture 14, resulting in changes in the convergent beam shape on the optical disk 5 and in deterioration of the reading characteristics. Thus, in the arrangement, both the objective lens 4 and the aperture 14 are mounted on the actuator so that the relative position between the objective lens 4 and the aperture 14 remains unchanged.

In the ordinary optical head device as shown in Fig. 1, the convergent beam diameter on the optical disk is inversely proportional to NA of the objective lens, and the tolerance to the tilting of the optical disk is inversely proportional to the square of NA of the objective lens. The signal deterioration caused by the tilting of the optical disk is mainly due to the occurrence of the comatic aberration. When the optical disk is tilted, the optical axis of the reflected light from the optical disk and the optical axis of the objective lens deviate from each other so that the component such as an RF signal component or a track error signal component in the case where a push-pull method is used no longer enters into the effective aperture of the objective lens, and this becomes a cause for the deterioration of the strength of each signal or the offsetting thereof.

The same phenomena as above occur in the optical system shown in Fig. 2 and, by the effective NA of the objective lens determined by the diameter of the aperture, the diameter of the focused beam and the tolerance to the tilting of the optical disk are determined. Thus, when the optical disk is tilted, the optical axis of the light reflected from the optical disk and the optical axis of the objective lens deviate from each other so that the component such as an RF signal component or a track error signal component in the case where a push-pull method is used no longer enters into the aperture, thus becoming a cause for the deterioration of the strength of each signal or the off-setting thereof.

An object of the invention, therefore, is to overcome the problems existing in the prior art, and to provide an optical head device in which, without varying an effective NA of the objective lens which converges the laser light to the optical disk, that is, without changing the convergent beam diameter on the surface of the optical disk, it is possible to reduce the signal deterioration caused by the tilting of the optical disk.

According to a first aspect of the invention, there is provided an optical head device comprising:
a semiconductor laser;
an objective lens which focuses incident light from the semiconductor laser on an optical recording medium;
a beam splitter which is provided between the semiconductor laser and the objective lens and which makes separation between the incident light from the semiconductor laser and reflection light from the optical recording medium;
an optical detector which receives the reflection light separated at the beam splitter;
a first optical means which causes a diameter of the laser beam incident on the objective lens to be smaller than an effective aperture of the objective lens; and
a second optical means which causes the light incident within the effective aperture of the objective lens and reflected from the optical recording medium to be led to the optical detector without the reflected light being spatially lost.

According to a second aspect of the invention, there is provided an optical head device in which the second optical means comprises a polarization aperture structure and a quarter-wave plate which, out of the light in a polarization direction, allow a portion of the light that is incident on an aperture portion whose diameter is smaller than the effective aperture of the objective lens to pass through, while allowing the remaining portion of the light to be diffracted, absorbed or reflected such that the light orthogonally directed thereto passes as it is through entire surfaces of the polarization aperture structure and the quarter-wave plate, the objective lens, the quarter-wave plate and the polarization aperture structure being disposed in this order from the optical disk.

When the optical head device according to the invention is used, it is possible to increase a range of tolerance for the tilting of the optical disk, and it is possible to reduce any deterioration caused by the tilting of the optical disk.

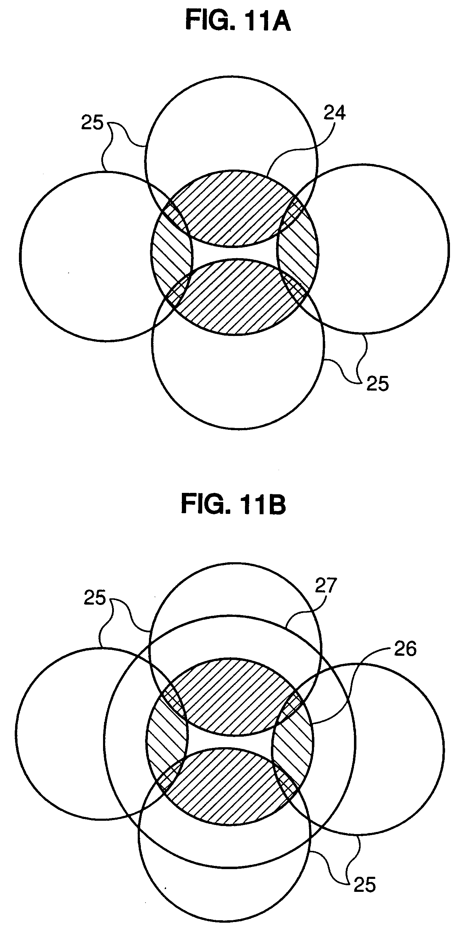

The function of the optical head device according to the invention is explained with reference to Figs. 11A and 11B.

In the optical system of an ordinary optical head, the effective aperture of the objective lens when the laser light is irradiated on the optical disk and the effective aperture of the objective lens when the reflected/diffracted light from the optical disk is received are equal to each other so that, as shown in Fig. 11A, out of the diffracted light 25, the portion that is incident onto the effective aperture 24 of the objective lens interferes with the reflected light (0-order diffracted light, and the magnitude corresponding to the effective aperture 24 of the objective lens) and results as a signal component. At this time, if the optical disk is tilted, the interfered signal component portion deviates from the effective aperture 24 of the objective lens, resulting in the deterioration of the signal strength.

However, according to the present invention, as shown in Fig. 11B, out of the diffracted light 25, the portion that overlaps the incident laser diameter 26 interferes with the reflected light (0-order diffraction light, and the magnitude corresponding to the incident laser diameter 26) and results as a signal component. This signal component according to the present invention is distributed inside at a distance from the periphery of the effective aperture 27 of the objective lens that receives the reflected/diffracted light from the optical disk so that, even when the optical disk is tilted to some extent, the signal component is incident onto the effective aperture 27 of the objective lens and is led to an optical detector. Thus, the deterioration of the signal strength can be reduced as compared with the ordinary optical head device.

The signal deterioration caused by the tilting of the optical disk is mainly due to the change in the shape of the convergent beam shape on the optical disk caused by the comatic aberration, but the extent of this comatic aberration is unconditionally determined by the NA of the objective lens irradiating the laser light on the optical disk and the wavelength of the laser light. Thus, in the present consideration of comparing the operation of the device according to the invention with that of the ordinary device, the laser wavelength used is the same as that in the latter, the NA of the objective lens in the former is made larger than the NA in the latter, and the incident laser diameter is adjusted so as to make the effective NA of the irradiating side in the former the same as the NA of the latter. This means that the conditions under which the comparison is being made takes into account the condition that the extent of the coma-aberration is the same in both the former and the latter.

In the operation of the device according to the invention, the effect achieved is most remarkable when the center of the incident laser diameter and the center of the effective aperture of the objective lens coincide with each other, and this can be appreciated from the facts that, as shown in Fig. 11B, the interference signal component distribution is concentrated around the center portion of the effective aperture of the objective lens and that, when the center of the effective aperture of the objective lens deviates from the incident laser, the shape of the convergent beam shape is changed.

However, in the cases where the effective aperture of the objective lens in the ordinary optical head is made larger while the laser light diameter is made smaller than the effective aperture of the objective lens, or where the optical head is fixed to the structure that limits the incident laser diameter and only the objective lens is mounted on the actuator, there develops a deviation between the incident laser diameter and the center of the effective aperture of the objective lens because the objective lens gradually shifts with the tracking.

In order to prevent the above problem, in the optical head device according to invention, the circuit that generates the signal for detecting the position of the objective lens and the signal that detects the position of the objective lens are utilized so as to make positional control of the objective lens actuator and the optical head slider for causing the center of the objective lens and the beam center of the laser light incident on the objective lens to be coincided with each other.

In the optical head device according to the invention, out of the light in the polarization direction, the light at the portion of the aperture whose diameter is smaller than the effective aperture of the objective lens is allowed to pass through and the light at other portion is diffracted, absorbed or reflected. For the light orthogonal to the polarization direction, there are a polarization aperture and a quarter-wave plate which allow this light to pass through their entire surfaces, the objective lens, the quarter-wave plate and the polarization aperture being disposed in this order from the optical disk side.

In this way, if the polarization of the laser light incident on the optical disk is directed in the direction in which it is diffracted, absorbed or reflected at the portion other than the aperture portion of the polarization aperture, the light converged on the optical disk from the objective lens is only the light at the aperture portion of the polarization aperture. However, the light that has been transmitted through the quarter-wave plate, has been reflected from the optical disk and has been transmitted again through the quarter-wave plate has its polarization light directed orthogonal to the reflected light so that the light reflected from the optical disk and incident onto the effective aperture is transmitted through the entire surface of the polarization aperture and led to the optical detection device.

The above and other objects, features and advantages of the present invention will be apparent from the following description of preferred embodiments of the invention explained with reference to the accompanying drawings, in which:
Fig. 1 is a diagram showing an example of a prior art optical head device;
Fig. 2 is a diagram showing another example of a prior art optical head device;
Fig. 3 is a diagram showing an optical head device of a first embodiment according to the invention;
Fig. 4 is a diagram showing an optical head device of a second embodiment according to the invention;
Fig. 5 is a diagram showing an optical head device of a third embodiment according to the invention;
Fig. 6 is a diagram showing an optical head device of a fourth embodiment according to the invention;
Fig. 7 is a diagram showing an optical head device of a fifth embodiment according to the invention;
Figs. 8A and 8B are diagrams showing a first example of a polarization aperture structure used in the optical head device of the fifth embodiment according to the invention;
Figs. 9A and 9B are diagrams showing a second example of a polarization aperture structure used in the optical head device of the fifth embodiment according to the invention;
Figs. 10A and 10B are diagrams for use in explaining phase changes of the polarization aperture structure used in the optical head device of the fifth embodiment according to the invention; and
Figs. 11A and 11B are diagrams for use in explaining the function of the optical head device according to the invention.

Now, preferred embodiments are explained with reference to the drawings.

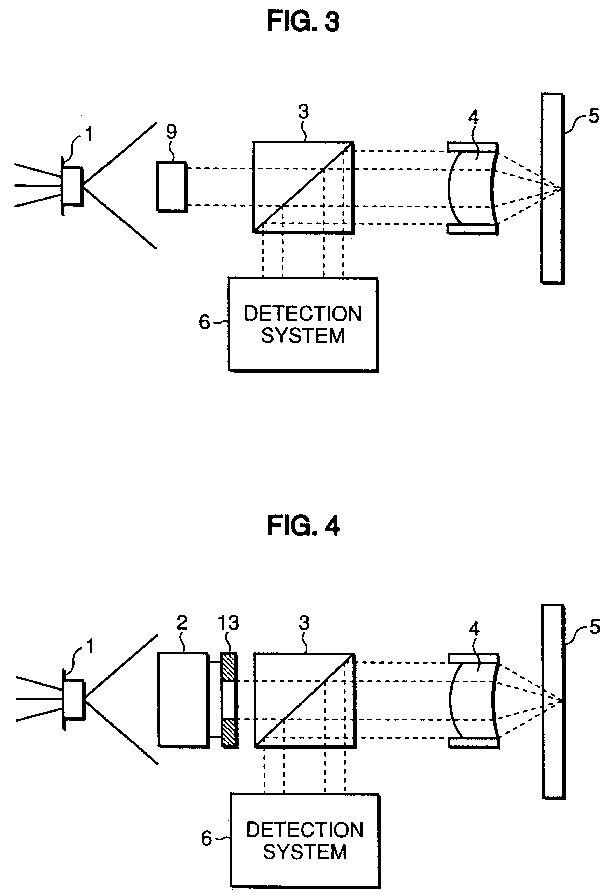

Fig. 3 shows a main structure of an optical head device of a first embodiment according to the invention. The light from a semiconductor laser 1 is collimated by a collimating lens 9 having an effective aperture smaller than an effective aperture of the objective lens 4, and a part of the light is transmitted through a beam splitter 3 and is focused on an optical disk 5 by the objective lens 4. Out of the reflected/diffracted light from the optical disk 5, a part of the light incident on the objective lens 4 is reflected at the beam splitter 3 and is led to an RF signal and servo signal detection system 6 whereby an RF signal and a servo signal are obtained.

In this first embodiment, the oscillation wavelength of the semiconductor laser 1 was 635 nm, the focal distance of the small diameter collimating lens 9 was 25 mm with NA of 0.0726 (the effective aperture then was 3.63 mm), the focal length of the objective lens 4 was 3.3 mm with NA of 0.65 (the effective aperture then was 4.29 mm), and the beam splitter 3 was with reflectivity and transmittivity of 50% in both the P and S waves.

The characteristics of the optical head device according to the invention have been compared with those of the optical head device of the ordinary optical system shown in Fig. 1. In the device used for comparison, the oscillation wavelength of the semiconductor laser 1 was the same 635 nm as in the device of this embodiment of the invention, the collimating lens 2 had the focal length of 25 mm with NA of 0.1 (the effective aperture then was 5.0 mm), the focal length of the objective lens 29 was 3.3 mm with NA of 0.55 (the effective aperture then was 3.63 mm), and the beam splitter 3 was with reflectivity and transmittivity of 50% in both the P and S waves as in the device of this embodiment.

Between these two structures, the NA of the objective lens in the embodiment is larger but, since the diameter of the incident laser light is 3.63 mm which is the diameter of the small diameter collimating lens 9, the NA that actually contributes to the converging of the light is 0.55 so that the convergent light diameter on the optical disk in both the cases is 0.9 µm × 1.0 µm (the radiation angle of the semiconductor laser being 32° × 8° in full angle at half maximum) and also the extent of the comatic aberration is the same in both the cases.

When, in the above two kinds of optical head devices, the reproduction is made of a CD having a track pitch of 0.8 µm and a density four times that of the ordinary CD with a maximum pitch length (3 T-pits) of 0.45 µm, the amount of tilting in which the block error rate exceeds 3 × 10⁻¹ increases to 0.25° in the tangential direction and to 0.33° in the radial direction at the position where the objective lens is in its optimum position when the track is being traced by the objective lens of this embodiment, whereas this in the ordinary optical head device was 0.2° in the tangential direction and 0.26° in the radial direction.

Fig. 4 shows a main structure of an optical head device of a second embodiment according to the invention. The light from a semiconductor laser 1 is collimated by a collimating lens 2 with the light being limited by an aperture 13 to a diameter smaller than the effective aperture of the objective lens 4, and a part of the light is transmitted through the beam splitter 3 and is focused on an optical disk 5 by the objective lens 4. Out of the reflected/diffracted light from the optical disk 5, a part of the light incident on the objective lens 4 is reflected at the beam splitter 3 and is led to an RF signal and servo signal detection system 6 whereby an RF signal and a servo signal are obtained.

In this second embodiment, the oscillation wavelength of the semiconductor laser 1 was 635 nm, the focal distance of the collimating lens 2 was 25 mm with NA of 0.1 (the effective aperture then was 5.0 mm), the focal length of the objective lens 4 was 3.3 mm with NA of 0.65 (the effective aperture then was 4.29 mm), the diameter of the aperture 13 was 3.63 mm, and the beam splitter 3 was with reflectivity and transmittivity of 50% in both the P and S waves.

The characteristics of the optical head device according to the invention have been compared with those of the optical head device of the ordinary optical system shown in Fig. 1. In the device compared with, the oscillation wavelength of the semiconductor laser 1 was the same 635 nm as in the device of this embodiment of the invention, the collimating lens 2 was the same and had the focal length of 25 mm with NA of 0.1 (the effective aperture then was 5.0 mm), the focal length of the objective lens 29 was 3.3 mm with NA of 0.55 (the effective aperture then was 3.63 mm), and the beam splitter 3 was with reflectivity and transmittivity of 50% in both the P and S waves as in the device of this embodiment.

Between these two structures, the NA of the objective lens in the embodiment is larger but, since the diameter of the incident laser light is 3.63 mm which is the diameter of the aperture 13, the NA that actually contributes to the converging of the light is 0.55 so that the convergent light diameter on the optical disk in both the cases is 0.9 µm × 1.0 µm (the radiation angle of the semiconductor laser being 32° × 8° in full angle at half maximum) and also the extent of the comatic aberration is the same in both the cases. When, in these two kind optical head devices, the reproduction is made of the CD having a track pitch of 0.8 µm and a density four times that of the ordinary CD with the maximum pitch length (3 T-pits) of 0.45 µm, the amount of tilting beyond the block error rate of 3 × 10⁻¹ has increased, whereas this in the ordinary optical head device was 0.2° in the tangential direction and 0.26° in the radial direction, to 0.25° in the tangential direction and to 0.33° in the radial direction at the position where the objective lens in the device of this embodiment was in its optimum position while the track is being traced by the objective lens.

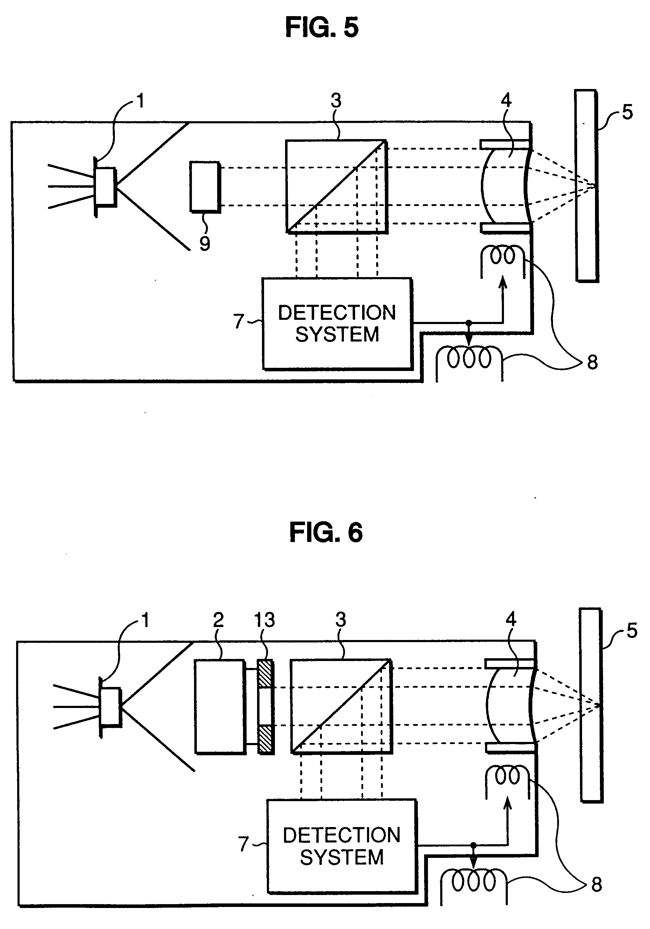

Fig. 5 shows a main structure of an optical head device of a third embodiment according to the invention. This device is constituted by a semiconductor laser 1, a small diameter collimating lens 9, a beam splitter 3, an objective lens 4 and an optical disk 5 as in the first embodiment, and the characteristics and the dimensions of the device of this embodiment are also the same as those in the first embodiment. The reflected/diffracted light from the optical disk 5 is led by the beam splitter 3 to the RF signal, servo signal and objective lens position detection system 7. By the objective lens position signal obtained at the RF signal, servo signal and objective lens position detection system 7, the control signal is caused to flow to a tracking coil and a slider coil 8 so as to maintain the relation that the center of the objective lens 4 and the center of the incident laser light are always coincided with each other. The tracking-trace which, in the ordinary optical head, was carried out using only the actuator on which the objective lens is mounted, is carried out in this embodiment by using a slider on which the entire optical system is mounted.

With the above arrangement, it was possible to ensure that, during the track-tracing, the center of the objective lens 4 and the center of the incident laser light were always coincided with each other, and the amount of tilting in which the block error rate exceeds 3 × 10⁻¹ was 0.25° in the tangential direction and 0.33° in the radial direction, the values being superior to those obtained in the ordinary optical head.

Fig. 6 shows a main structure of an optical head device of a fourth embodiment according to the invention. This device is constituted by a semiconductor laser 1, a collimating lens 2, an aperture 13, a beam splitter 3, an objective lens 4 and an optical disk 5 as in the second embodiment, and the characteristics and the dimensions of the device of this embodiment are also the same as those in the second embodiment. The reflected/diffracted light from the optical disk 5 is led to the RF signal, servo signal and objective lens detection system 7 by the beam splitter 3 as in the third embodiment. As in the third embodiment, by the objective lens position signal obtained at the RF signal, servo signal and objective lens position detection system 7, the control signal is caused to flow to a tracking coil and a slider coil 8 so as to maintain the relation that the center of the objective lens 4 and the center of the incident laser light are always coincided with each other. The tracking-trace which, in the ordinary optical head, was carried out using only the actuator on which the objective lens is mounted, is carried out in this embodiment by using a slider on which the entire optical system is mounted.

With the above arrangement, it was possible to ensure that, during the track-tracing, the center of the objective lens 4 and the center of the incident laser light were always coincided with each other, and the amount of tilting in which the block error rate exceeds 3 × 10⁻¹ was 0.25° in the tangential direction and 0.33° in the radial direction, the values being superior to those obtained in the ordinary optical head.

In the third and fourth embodiments, it is arranged that, as with the RF signal and the servo signal, the position of the objective lens is detected from a part of the light from the semiconductor laser 1 that is reflected/diffracted at the optical disk 5. However, the arrangements are not limited thereto as other means may instead be used as long as such means are of dedicated optical systems or structures enabling the detection of the position of the objective lens.

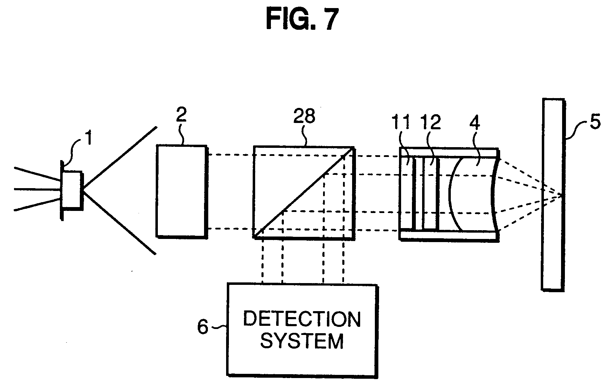

Fig. 7 shows a main structure of an optical head device of a fifth embodiment according to the invention. The light from a semiconductor laser 1 is collimated by a collimating lens 2. In the polarization direction of the laser light transmitted through a beam splitter 28, the light having passed through an aperture portion of the polarization aperture 11 passes through a quarter-wave plate 12. The resulting light is circularly polarized light which is focused on the optical disk 5 by the objective lens 4. The light that is reflected/diffracted at the optical disk passes through the objective lens 4 and is caused to be the linear polarization light in the direction orthogonal to the light at the time of incidence by the quarter-wave plate 12. In this polarization direction, the light is transmitted through the entire surface of the polarization aperture 11 and is led to the RF signal and servo signal detection system through the beam splitter 28 whereby an RF signal and a servo signal are obtained.

In this fifth embodiment, the oscillation wavelength of the semiconductor laser 1 was 635 nm, the focal distance of the collimating lens 2 was 25 mm with NA of 0.1 (the effective aperture then was 5.0 mm), the focal length of the objective lens 4 was 3.3 mm with NA of 0.65 (the effective aperture then was 4.29 mm), the transmittivity of the P waves of the beam splitter 28 was not less than 97%, and the reflectivity of the S waves was not less than 97%.

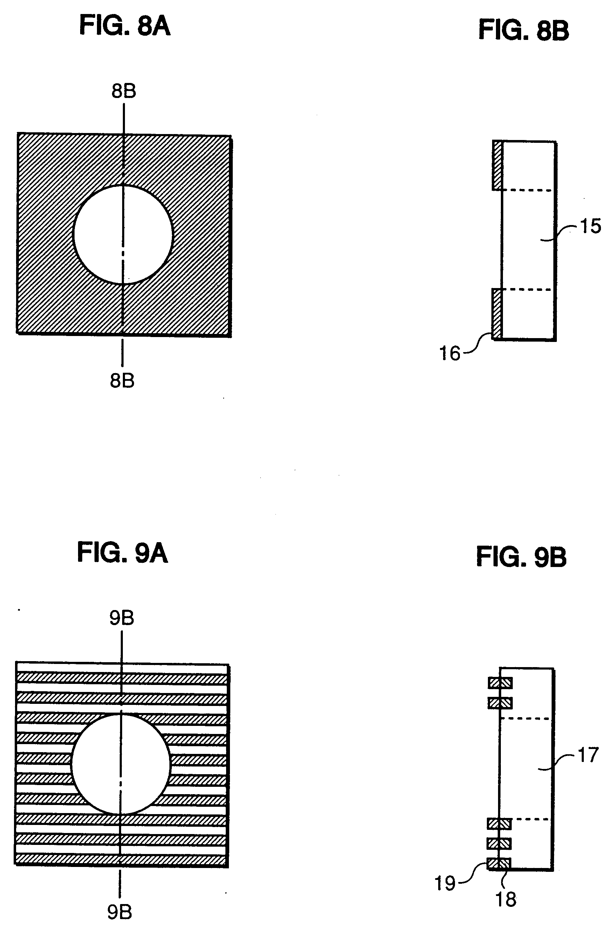

Two kinds of structures as examples of the polarization light aperture 11 of this fifth embodiment shown in Fig. 7 are explained with reference to Figs. 8A and 8B.

Figs. 8A and 8B show a first example of the polarization aperture. In this structure, a sheet polarizer 16 having an aperture of 3.63 mm in diameter is bonded on a glass plate 15. The sheet polarizer 16 is directed in the direction, with respect to the polarization of the light incident from the side of the semiconductor laser 1, in which the light is absorbed and not allowed to pass. The polarization aperture shown in Fig. 8A has its center coincided with the center of the objective lens 4, and is carried by an objective lens actuator having a quarter-wave plate 12 so as to be allowed to move together with the objective lens 4.

In this way, the laser light having a diameter of 3.63 mm is incident always on the center portion of the objective lens 4 so that, out of the light that has been reflected/diffracted at the optical disk 5, the light incident on the objective lens 4 having an effective aperture of 4.29 mm is changed, by the quarter-wave plate 12, to linear polarization light orthogonal to the light at the time of incidence, and the light at the portion where the sheet polarizer 16 shown in Fig. 8B exists is also transmitted. Thus, when the track is traced, the center of the objective lens 4 and the center of the incident laser light are always coincided with each other. In the tests conducted, and the amount of the tilting in which the block error rate exceeds 3 × 10⁻¹ was 0.25° in the tangential direction and 0.33° in the radial direction, and the resulting values superior to those in the ordinary optical system have constantly been obtained.

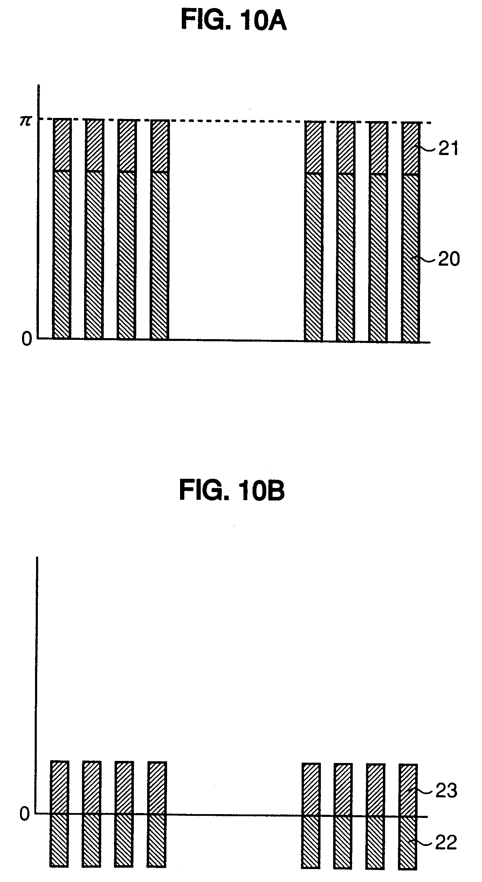

Figs. 9A and 9B show a second example of the polarization aperture structure. At the portion other than the aperture portion having a diameter of 3.63 mm in a lithium niobate substrate 17, a proton exchange region 18 in a grating form is formed, and a dielectric film 19 is provided thereon. Figs. 10A and 10B show phase change distributions respectively with respect to the extraordinary light and the ordinary light at the portion outside the aperture portion. When the depth of the proton exchange region 18 and the thickness of the dielectric film 19 are set so as to be in correspondence to the oscillation wavelength of the semiconductor laser 1, the phase change 20 by the proton exchange region and the phase change 21 by the dielectric film are added up as shown in Fig. 10A with respect to the ordinary light thereby allowing the structure to function as a phase diffraction grating having a phase change corresponding to π to the original lithium niobate substrate 17, while the phase change 22 by the proton exchange region and the phase change 23 by the dielectric film are canceled out from each other for the extraordinary light thereby allowing the structure to function as a parallel plate having no phase change with respect to the lithium niobate substrate 17.

Further, for the extraordinary light, the width and the pitch of the proton exchange region 18 and the dielectric film 19 have been set to values at which no 0-order diffraction light is generated and ±1-order diffraction light is generated most intensely. The polarization aperture shown in Fig. 9A has its center coincided with the center of the objective lens 4 and, for the polarization direction of the semiconductor laser to become the director for the extraordinary light, there is provided an objective lens actuator together with a quarter-wave plate 12 so as to allow it to move with the objective lens 4. In this configuration, out of the light from the semiconductor laser 1 that has been transmitted through the beam splitter 28 and is incident on the polarization aperture structure shown in Fig. 9A, the light at the aperture portion is transmitted as it is, but other portions are diffracted by the phase diffraction grating so that they are not incident on the objective lens 4, or are only obliquely incident thereon. Thus, the light is not focused at the normal position on the optical disk 5 and does not contribute to the signal reproduction.

Therefore, the laser light having a diameter of 3.63 mm is always incident on the center portion of the objective lens 4 and, out of the light reflected/diffracted at the optical disk 5, the light incident on the objective lens 4 having an effective aperture of 4.29 mm returns to the polarization aperture structure shown in Fig. 9A as being linear diffraction light in the direction orthogonal to the incident light by the quarter-wave plate 12. At this time, the light is incident as the ordinary light so that the polarization aperture structure shown in Fig. 9A functions only as a parallel plate which leads also the light outside the aperture to the RF signal and servo signal detection system. In this way, when the track is traced, the center of the objective lens 4 and the incident laser light are always coincided with each other and, in the tests conducted, the amount of the tilting in which the block error rate exceeds 3 × 10⁻¹ was 0.25° in the tangential direction and 0.33° in the radial direction, and it was possible to obtain constantly the values which were superior to those in the ordinary optical head.

The foregoing explanations have been made of two kinds of structures shown in Figs. 8A, 8B and 9A, 9B as examples of the polarization aperture structure 11 of this embodiment shown in Fig. 7. However, the invention is not limited to the examples since it is possible to use other arrangements. For example, instead of the sheet polarizer, a crystal polarizer having a hole in its center may be used; instead of the glass plate, a quarter-wave plate to which a sheet polarizer is directly bonded may be used and, instead of the kind of the diffraction grating as shown in Fig. 9, one in which no dielectric film is provided and in which a part of a surface of the proton exchange region is etched may be used.

In the explanation of the embodiments, the various values such as those for wavelength of the semiconductor laser and NA of various lenses have been given, but they are only for purposes of showing quantitative effects and are in no way for limiting the scope of the invention. Such values may be appropriately selected in the actual fabrication of the optical head device according to the invention.

## Claims

1. An optical head device characterized by comprising:
a semiconductor laser (1);
an object lens (4) which focuses incident light from said semiconductor laser on an optical recording medium (5);
a beam splitter (3;28) which is provided between said semiconductor laser and said object lens and which makes separation between said incident light from said semiconductor laser and reflection light from said optical recording medium;
an optical detector (6,7) which receives said reflection light separated at said beam splitter;
a first optical means (9;2,13) which causes a diameter of the laser beam incident on said objective lens to be smaller than an effective aperture of said objective lens; and
a second optical means (4;11,12) which causes the light incident within said effective aperture of said object lens and reflected from said optical recording medium to be led to said optical detector without the reflected light being spatially lost.

2. An optical head device according to claim 1, in which said first optical means comprises a collimating lens (2) which is disposed between said semiconductor laser and said beam splitter and which has an effective aperture smaller than the effective aperture of said object lens.

3. A device according to claim 1 or 2, in which said first optical means comprises an aperture structure (13) which is disposed between said semiconductor laser and said beam splitter and which has an effective aperture smaller than the effective aperture of said object lens.

4. A device according to claim 1, 2, or 3, which further comprises a control means (8) which controls a position of said object lens such that a center of said object lens and a center of a beam of the laser light incident on said objective lens are caused to be coincided with each other, and a position of an optical head slider.

5. A device according to any of claims 1 to 4, in which said second optical means comprises a polarization aperture structure (11) and a quarter-wave plate (12) which, out of the light in a polarization direction, allow a portion of the light that is incident on an aperture portion whose diameter is smaller than the effective aperture of said objective lens to pass through, while allowing the remaining portion of the light to be diffracted, absorbed or reflected such that the light orthogonally directed thereto passes as it is through entire surfaces of said polarization aperture structure and said quarter-wave plate, said objective lens, said quarter-wave plate and said polarization aperture structure being disposed in this order from said optical disk.

6. An optical head device according to claim 5, in which said objective lens, said quarter-wave plate and said polarization aperture structure are in an assembly allowing them to move together.
